# EUROPÄISCHE PATENTSCHRIFT

(11) **EP 3 894 203 B1**
(45) Veröffentlichungstag und Bekanntmachung des Hinweises auf die Patenterteilung: **07.01.2026**
(21) Anmeldenummer: 19818020.0
(22) Anmeldetag: 09.12.2019
(51) Int. Cl.: B30B 9/24, A22C 17/04

(54) **VORRICHTUNG UND VERFAHREN ZUM TRENNEN VON MITEINANDER VERMISCHTEN STOFFEN UNTERSCHIEDLICHER FLIESSFÄHIGKEIT**
APPARATUS AND METHOD FOR SEPARATING MATERIALS OF DIFFERENT FLOWABILITY THAT ARE MIXED TOGETHER
DISPOSITIF ET PROCÉDÉ POUR SÉPARER DES SUBSTANCES DE FLUIDITÉS DIFFÉRENTES MÉLANGÉES ENTRE ELLES

(30) Priorität: 10.12.2018 DE 102018131533
(43) Veröffentlichungstag der Anmeldung: 20.10.2021
(73) Patentinhaber: Nordischer Maschinenbau Rud. Baader GmbH + Co. KG, 23560 Lübeck (DE)
(72) Erfinder: FUCHS, Michael, 23684 Pönitz (DE); HÄRTLEIN, Joachim, 23611 Bad Schwartau (DE); FLEISCHMANN, Julia, 23558 Lübeck (DE); DENKER, Christian, Verstorben (DE)
(74) Vertreter: Stork Bamberger Patentanwälte PartmbB
(86) Internationale Anmeldenummer: PCT/EP2019/084165
(87) Internationale Veröffentlichungsnummer: WO 2020/120374

(56) Entgegenhaltungen:
- EP-A2- 1 389 510
- DE-A1- 102014 117 973
- DE-A1- 3 516 623
- DE-C1- 3 903 022
- US-A- 4 475 453

## Beschreibung

Die Erfindung betrifft eine Vorrichtung zum Trennen von miteinander vermischten Stoffen unterschiedlicher Fließfähigkeit, umfassend ein Rahmengestell, eine umlaufend angetriebene und am Rahmengstell gelagerte Hohltrommel mit perforierter Mantelfläche, ein von außen an diese unter Umschlingung eines Teils des Umfangs der Hohltrommel anpressbares, endloses Pressband, das umlaufend angetrieben ist, einen durch Pressband und Hohltrommel gebildeten Produkt-Einzugskeil zum Leiten eines aus Pressgut bestehenden Produktstroms zwischen die Hohltrommel und das Pressband in einem Einlaufbereich des Produktstroms in die Vorrichtung, sowie eine Stützvorrichtung für das Pressband mit wenigstens einem Stützelement, das auf der der Hohltrommel entgegengesetzten Seite des Pressbandes angeordnet ist, wobei das Stützelement als Rollenbahn ausgebildet ist, die mehrere Rollen umfasst, die in Förderrichtung des Produktstroms hintereinander angeordnet und mindestens teilweise federnd gelagert sind.

Die Erfindung betrifft weiterhin ein Verfahren zum Trennen von miteinander vermischten Stoffen unterschiedlicher Fließfähigkeit, umfassend die Schritte: Zuführen eines aus Pressgut bestehenden Produktstroms in einen Produkt-Einzugskeil, der durch eine Hohltrommel mit perforierter Mantelfläche und ein Pressband, das von außen an der Hohltrommel unter Umschlingung eines Teils des Umfangs anliegt, gebildet ist, umlaufendes Antreiben der Hohltrommel und des Pressbandes zum Einziehen des Produktstroms zwischen die Hohltrommel und das Pressband, wobei die leichter fließenden Bestandteile des Produktstroms mittels des Pressbandes durch die Perforation der Mantelfläche der Hohltrommel in den inneren Hohlraum der Hohltrommel gepresst und abgeführt werden, während die schwerer fließenden Bestandteile des Produktstroms außen auf der Mantelfläche der Hohltrommel verbleiben und separat abgegeben werden, wobei das Pressband auf der der Hohltrommel entgegengesetzten Seite des Pressbandes durch eine Rollenbahn, die mehrere in Förderrichtung des Produktstroms hintereinander angeordnete und mindestens teilweise federnd gelagerte Rollen umfasst, als Stützelement gestützt wird.

Einer Trennung zugänglich sind Stoffe, Materialien bzw. Produkte, die sich bzw. deren Zusammensetzung sich durch ihr voneinander abweichendes Fließverhalten unterscheiden. Die Möglichkeit und/oder Notwendigkeit der Trennung von miteinander vermischten Stoffen unterschiedlicher Fließfähigkeit besteht z.B. bei der Verwertung von Tierkörpern (etwa der Abtrennung des Fleisches von der Haut, Sehnen, Flechten, Knochen bzw. Gräten etc.) oder Teilen davon, bei der Verwertung von Obst und Gemüse (etwa der Abtrennung des Fruchtfleisches von Schale, Stielen, Kernen bzw. Steinen etc.), bei der Aufarbeitung von fehlverpackten Lebensmitteln (etwa der Abtrennung von Butter oder Käse vom Verpackungsmaterial) oder dergleichen. Konkrete Anwendungsbeispiele sind z.B. das Entkernen von Datteln oder das Entpacken von in Folie verpackten Käsescheiben.

Beim Verwerten, Entkernen oder Entpacken oder jedem anderen entsprechenden Separieren wird ein Produktstrom ausgehend von einem Produktzuführbereich zwischen dem Presselement, also z.B. dem Pressband und der Hohltrommel hindurch zu einem Produktausgabebereich gefördert. Dabei werden die Stoffe unterschiedlicher Fließfähigkeit getrennt, in dem die leichter fließenden Stoffe, am Beispiel der Verwertung der Tierkörper oder Teilen davon das Fleisch, mindestens teilweise in die Hohltrommel gedrückt und von dort abgeführt werden. Die schwerer fließenden Stoffe, wiederum am Beispiel der Verwertung der Tierkörper oder Teilen davon die Knochen, Sehnen, Haut etc., werden in Förderrichtung des Produktstroms hinter der Hohltrommel im Produktausgabebereich gesammelt und abgeführt. Der durch die perforierte Mantelfläche ins Innere der Hohltrommel gedrückte Anteil des Produktstroms wird abgeführt und zur Weiterverarbeitung geleitet. Allerdings haftet der nicht durch die perforierte Mantelfläche ins Innere der Hohltrommel gedrückte Reststrom des Produktstroms einschließlich der schwerer fließenden Bestandteile üblicherweise mindestens teilweise außen an der Mantelfläche der Hohltrommel. Dieser außen an der Hohltrommel anhaftende Reststrom kann z.B. durch Abstreifmittel gelöst werden.

Solche Vorrichtungen und Verfahren kommen also in verschiedenen Industriebereichen, insbesondere jedoch in der Lebensmittelindustrie zum Einsatz. Mit den zuvor beschriebenen Vorrichtungen, die auch als Trenneinrichtungen oder Separatoren bezeichnet werden, lassen sich verschiedenartige Stoffe einem Trennprozess unterziehen. Dazu werden die zu trennenden Stoffe, also das Pressgut bzw. Trenngut oder auch Separat, in einem Produktstrom in den Bereich des Produkt-Einzugskeils geführt. Der Produkt-Einzugskeil wird durch die Anordnung von Pressband zu Hohltrommel gebildet und führt im Einlaufbereich E des Produktstroms in die Vorrichtung zu einem (Einlauf-)Winkel. Durch den umlaufenden Antrieb der Hohltrommel und/oder den umlaufenden Antrieb des Pressbandes wird der Produktstrom im Einlaufbereich in Förderrichtung zwischen die Hohltrommel und das Pressband eingezogen, so dass zwischen dem Pressband und der Hohltrommel ein (mit Produktstrom gefüllter) Abstand/Spalt entsteht. Die Größe des (Einlauf-)Winkels ist dabei wichtig für den optimalen Einzug des Produktstroms und sollte entsprechend der gewählten Voreinstellung daher möglichst konstant gehalten werden.

Der Produktstrom wird von außen mittels des Pressbandes oder jedes anderen Presselementes gegen die perforierte Mantelfläche der Hohltrommel gedrückt. Unter diesem Druck werden die leichter fließenden Bestandteile des Produktstroms durch die Perforation der Mantelfläche in den inneren Hohlraum der rotierenden Hohltrommel gepresst, während die schwerer fließenden Bestandteile des Produktstroms außen auf der Mantelfläche der Hohltrommel verbleiben und ggf. im Auslaufbereich in Förderrichtung hinter der Hohltrommel abgeführt werden. Beim Einzug des Produktstroms zwischen die Hohltrommel und das Pressband einerseits sowie beim eigentlichen Trennprozess treten erhebliche Drücke auf und wirken auf die Hohltrommel und das Presselement, insbesondere auf ein zumindest geringfügig elastisches Pressband, derart, dass es zu unerwünschten Überdehnungen kommen kann. Die Belastung tritt in der gesamten Druckzone, also im Bereich der Umschlingung der Hohltrommel durch das Pressband, auf. Besondere Belastungsspitzen, z.B. durch unerwartet große Pressgutstücke, treten dabei im Einlaufbereich zwischen Pressband und Hohltrommel auf. Um diesen Drücken entgegenzuwirken bzw. ein Ausweichen und Überdehnen des Pressbandes mindestens teilweise zu unterbinden oder zu minimieren, ist auf der der Hohltrommel entgegengesetzten Seite des Pressbandes eine Stützvorrichtung vorgesehen.

Aus der WO 2011/092087 sind mehrere Rollen als Stützelement bekannt, die die Stützvorrichtung bilden. Die Rollen oder Walzen sind mindestens teilweise in Langlöchern geführt und federbelastet, so dass sie bei zunehmendem Druck ausweichen können. Allerdings sind diese Stützelemente nur für einen einzelnen Anwendungsfall ausgelegt. Entsprechend ist die bekannte Lösung unflexibel und unsicher, da weder spontan, also aus dem Prozess heraus, noch auf zu erwartende Belastungsfälle reagiert werden kann, so dass es durch den beim Trennprozess auftretenden Druck zwischen Pressband und perforierter Hohltrommel einerseits und der beim Trennprozess auftretenden Reibung zwischen dem Pressband und der Hohltrommel andererseits trotz der federnd gelagerten Stützelemente zu einem erheblichen Verschleiß insbesondere des Pressbandes kommen kann, das entsprechend regelmäßig ausgetauscht werden muss. Die Stillstandzeiten führen des Weiteren zu einem Leistungsverlust der Vorrichtung. Die DE 35 16 623 A1, die US 4,475,453 und die DE 10 2014 117 973 A1 zeigen ebenfalls gattungsgemäße Vorrichtungen. Die DE 10 2014 117 973 A1 offenbart eine Vorrichtung gemäß dem Oberbegriff des Anspruchs 1 und ein Verfahren gemäß dem Oberbegriff des Anspruchs 10.

Der Erfindung liegt somit die Aufgabe zugrunde, eine verschleißarme und flexible, nämlich für unterschiedliche Belastungsfälle einsetzbare, Vorrichtung mit verbesserter Leistungsfähigkeit zu schaffen. Die Aufgabe besteht weiterhin darin, ein entsprechendes Verfahren vorzuschlagen.

Diese Aufgabe wird durch eine Vorrichtung der eingangs genannten Art dadurch gelöst, dass die Federkraft mindestens einzelner Rollen steuerbar ist, wobei der oder jeder Rolle jeweils mindestens ein Proportionalventil zum aktiven Einstellen der Federkraft zugeordnet und jedes Proportionalventil an eine Steuer- und/oder Regelungseinrichtung angeschlossen ist, wobei der Vorrichtung eine erste Detektionseinrichtung zugeordnet ist, die zum Detektieren produktspezifischer Daten des einlaufenden Produktstroms als Prozessparameter ausgebildet und eingerichtet ist, wobei die erste Detektionseinrichtung an die Steuerungs- und/oder Regelungseinrichtung angeschlossen ist, wobei die Federkraft der Rollen auf der Basis voreingestellter und/oder während des Prozesses ermittelter Prozessparameter gesteuert und/oder geregelt wird. Dadurch, dass mindestens einzelne Rollen des Stützelementes bezüglich ihrer Federkraft eingestellt werden können, kann das Stützelement und damit auch das Pressband einerseits auf unterschiedliche Belastungsfälle voreingestellt werden und andererseits an unvorhergesehene Belastungsfälle angepasst werden. Mit der Steuerbarkeit/Einstellbarkeit der Federkraft mindestens einzelner Rollen können ungünstige Belastungsfälle sogar vollständig vermieden werden. Die erfindungsgemäße Ausführung gewährleistet somit eine hohe Flexibilität sowie verbesserte Standzeiten von Hohltrommel und insbesondere Pressband, da Belastungsspitzen ausgeglichen oder vermieden werden können.

Mittels der Proportionalventile lässt sich schnell und präzise die jeweilige Federkraft z.B. der Pneumatik- oder Hydraulikzylinder steuern/einstellen, so dass auf unterschiedliche Belastungsfälle unmittelbar reagiert werden kann. Eine solche Steuerungs- und/oder Regelungseinrichtung gewährleistet eine Anpassung des Stützelementes an den zu trennenden Produktstrom, um einen störungsfreien und verschleißoptimierten Betrieb der Vorrichtung sicherzustellen und gleichzeitig einen ausbeuteeffizienten Trennprozess zur Verfügung zu stellen. Durch das Detektieren von Prozessparametern des Produktstroms kann eine noch flexiblere und individuellere Einstellung der jeweiligen Federkraft gewährleistet werden.

Eine bevorzugte Ausführungsform ist dadurch gekennzeichnet, dass mindestens die im Einlaufbereich E befindliche(n) Rolle(n) der Rollenbahn hinsichtlich ihrer Federkraft steuerbar ist (sind). Damit ist die oder jede Rolle gemeint, die im Bereich des Produkt-Einzugskeils auf der der Hohltrommel entgegengesetzten Seite des Pressbandes angeordnet ist. Durch die steuerbare Federkraft gerade dieser Rolle(n) wird sichergestellt, dass die Größe des (Einlauf-)Winkels, die für den optimalen Einzug des Produktstroms wichtig ist, trotzt wechselnder Belastungsfälle möglichst konstant gehalten werden kann, wodurch zum einen die Standzeiten insbesondere des Pressbandes und zum anderen die Leistungsfähigkeit der Vorrichtung verbessert werden.

Eine vorteilhafte Weiterbildung zeichnet sich dadurch aus, dass alle Rollen der Rollenbahn federnd gelagert sind, wobei die Federkraft für jede Rolle jeweils individuell während des Betriebs der Vorrichtung steuerbar ist. Damit wird das Pressband flexibel und individuell in der gesamten Druckzone, über die sich die Rollenbahn mit ihren Rollen im Umfangsbereich der Hohltrommel erstreckt, möglichst gleichmäßig und flächig unterstützt.

Optional ist der Vorrichtung eine zweite Detektionseinrichtung zugeordnet, die zum Detektieren vorrichtungsspezifischer Daten als Prozessparameter ausgebildet und eingerichtet ist, wobei die zweite Detektionseinrichtung an die Steuerungs- und/oder Regelungseinrichtung angeschlossen ist. Durch das Detektieren von Prozessparametern der Vorrichtung selbst können die Flexibilität und die Individualität bei der Einstellung der jeweiligen Federkraft noch weiter verbessert werden.

Besonders bevorzugt ist die Vorrichtung dadurch gekennzeichnet, dass alle Proportionalventile an eine gemeinsame Steuerungs- und/oder Regelungseinrichtung angeschlossen sind, wobei die Steuerungs- und/oder Regelungseinrichtung einen Datenspeicher und eine Auswerteeinheit umfasst, um voreingestellte und/oder während des Prozesses ermittelte Prozessparameter zu speichern und/oder zu verarbeiten, derart, dass die Federkraft jeder Rolle auf der Basis der Prozessparameter steuerbar und/oder regelbar ist. Mit der beschriebenen Ausführung können die bereits genannten Vorteile auf besonders effiziente und zuverlässige Weise erreicht werden.

In einer vorteilhaften Weiterbildung umfasst die erste Detektionseinrichtung zum Detektieren produktspezifischer Daten mindestens eine Sensoreinheit zum Detektieren des Volumens und/oder der Dichte und/oder der Konsistenz des Produktstroms. Durch das Ermitteln der genannten Daten oder vergleichbarer bzw. weiterer relevanter Daten zum Produktstrom kann das Einstellen der Federkraft zur Verbesserung der Flexibilität und der Effizienz der Vorrichtung weiter optimiert und präzisiert werden.

Vorzugsweise umfasst die zweite Detektionseinrichtung zum Detektieren vorrichtungsspezifischer Daten mindestens eine Sensoreinheit zum Detektieren des an den Proportionalventilen anliegenden Drucks und/oder des Verschleißes des Pressbandes und/oder der Spaltgröße zwischen Pressband und Hohltrommel. Durch das Ermitteln der genannten Daten oder vergleichbarer bzw. weiterer relevanter Daten zur Vorrichtung bzw. zu deren Zustand kann das Einstellen der Federkraft zur Verbesserung der Flexibilität und der Effizienz der Vorrichtung weiter optimiert und präzisiert werden.

In einer weiteren bevorzugten Ausführungsform umfasst die Stützvorrichtung neben der Rollenbahn als Stützelement eine Stützkette, wobei die Rollen der Rollenbahn dann mindestens teilweise als Kettenräder ausgebildet sind. Mit der zusätzlichen Stützkette als weiteres Stützelement können die beim Trennprozess auftretenden Drücke noch besser aufgenommen werden, was zu einem geringeren Verschleiß und zu einer erhöhten Effizienz führt.

Vorteilhafterweise sind die Rollen mit einem Schnellverschlusssystem am Rahmengestell gelagert. Zum einen ist ein einfaches und schnelles Wechseln der Rollen gewährleistet, wodurch die Stillstandzeiten reduziert werden können. Zum anderen ist die Reinigung der Rollen aber auch der Vorrichtung insgesamt vereinfacht.

Die Aufgabe wird auch durch ein Verfahren mit den eingangs gennannten Schritten dadurch gelöst, dass die Federkraft mindestens einzelner Rollen gesteuert wird, wobei allen Rollen jeweils mindestens ein Proportionalventil zugeordnet ist und die Proportionalventile an eine Steuerungs- und/oder Regelungseinrichtung angeschlossen sind, so dass alle Rollen bezüglich ihrer Federkraft aktiv eingestellt werden, wobei mittels einer ersten Detektionseinrichtung produktspezifische Daten des einlaufenden Produktstroms als Prozessparameter detektiert werden, wobei die Federkraft der Rollen auf der Basis voreingestellter und/oder während des Prozesses ermittelter Prozessparameter gesteuert und/oder geregelt wird.

Besonders bevorzugt werden mittels einer zweiten Detektionseinrichtung produktspezifische Daten des einlaufenden Produktstroms als Prozessparameter und vorrichtungsspezifische Daten einer Vorrichtung zum Trennen von miteinander vermischten Stoffen unterschiedlicher Fließfähigkeit als Prozessparameter detektiert. Das Detektieren kann durch separate Detektionseinrichtungen oder eine gemeinsame Detektionseinrichtung erfolgen.

Besonders bevorzugt wird das Verfahren mit einer Vorrichtung nach einem oder mehreren der Ansprüche 1 bis 9 ausgeführt.

Die sich aus den Verfahrensschritten ergebenden Vorteile wurden bereits im Zusammenhang mit der Vorrichtung beschrieben, weshalb zur Vermeidung von Wiederholungen auf die obigen Ausführungen verwiesen wird.

Weitere zweckmäßige und/oder vorteilhafte Merkmale und Weiterbildungen der Vorrichtung sowie des Verfahrens ergeben sich aus den Unteransprüchen und der Beschreibung. Besonders bevorzugte Ausführungsformen der Vorrichtung sowie das Verfahren werden anhand der beigefügten Zeichnung näher erläutert. In der Zeichnung zeigt:

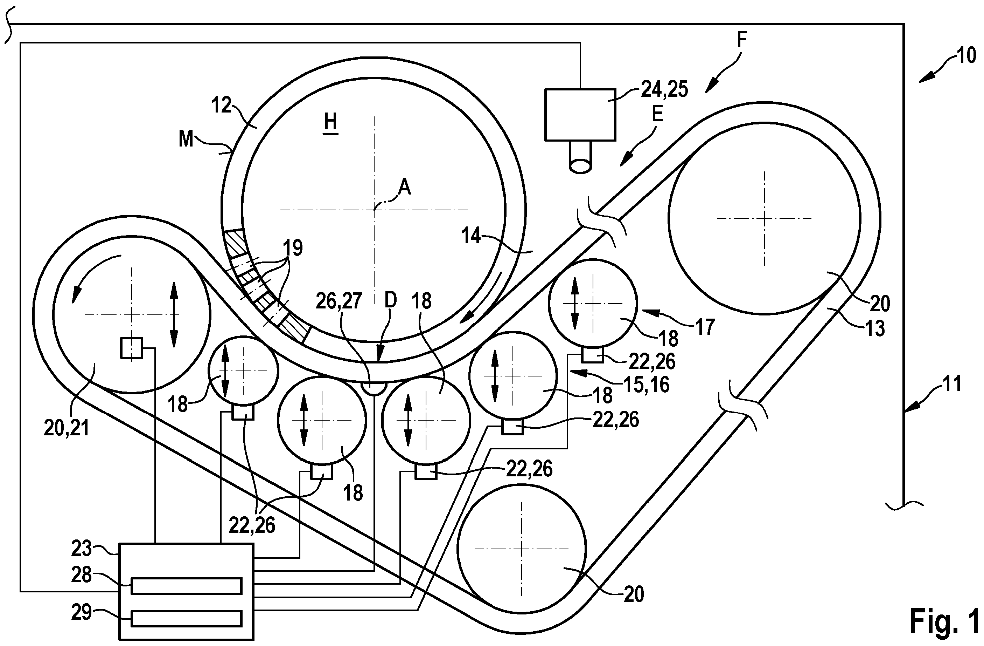

- Fig. 1: eine schematische Darstellung einer bevorzugten Ausführungsform der erfindungsgemäßen Vorrichtung.

Die in der Zeichnung dargestellte Vorrichtung dient zum Trennen von Fleisch einerseits und Knochen, Knochenresten, Sehnen, Knorpeln und dergleichen andererseits und weist eine Mehrzahl bevorzugter Merkmale auf. Andere Ausführungsformen, die weniger oder andere Merkmale aufweisen, sind nicht explizit dargestellt. Die Vorrichtung kann in gleicher Weise auch zum Trennen z.B. von Fruchtfleisch von Kernen oder zum Trennen jeglicher anderen vermischten Stoffe unterschiedlicher Fließfähigkeit eingesetzt werden.

Die dargestellte Vorrichtung 10 ist zum Trennen von miteinander vermischten Stoffen unterschiedlicher Fließfähigkeit ausgebildet und eingerichtet und umfasst ein Rahmengestell 11, eine umlaufend angetriebene und am Rahmengstell 11 gelagerte Hohltrommel 12 mit perforierter Mantelfläche M, ein von außen an diese unter Umschlingung eines Teils des Umfangs der Hohltrommel 12 anpressbares, endloses Pressband 13, das umlaufend angetrieben ist, einen durch Pressband 13 und Hohltrommel 12 gebildeten Produkt-Einzugskeil 14 zum Leiten eines aus Pressgut bestehenden Produktstroms zwischen die Hohltrommel 12 und das Pressband 13 in einem Einlaufbereich E des Produktstroms in die Vorrichtung 10, sowie eine Stützvorrichtung 15 für das Pressband 13 mit wenigstens einem Stützelement 16, das auf der der Hohltrommel 12 entgegengesetzten Seite des Pressbandes 13 angeordnet ist, wobei das Stützelement 16 als Rollenbahn 17 ausgebildet ist, die mehrere Rollen 18 umfasst, die in Förderrichtung F des Produktstroms hintereinander angeordnet und mindestens teilweise federnd gelagert sind.

Diese Vorrichtung 10 zeichnet sich erfindungsgemäß dadurch aus, dass die Federkraft mindestens einzelner Rollen 18 steuerbar ist, wobei der oder jeder Rolle 18 jeweils mindestens ein Proportionalventil 22 zum aktiven Einstellen der Federkraft zugeordnet und jedes Proportionalventil 22 an eine einen Datenspeicher 28 und eine Auswerteeinheit 29 umfassende Steuer- und/oder Regelungseinrichtung 23 angeschlossen ist, wobei der Vorrichtung 10 eine erste Detektionseinrichtung 24 zugeordnet ist, die zum Detektieren produktspezifischer Daten des einlaufenden Produktstroms als Prozessparameter ausgebildet und eingerichtet ist, wobei die erste Detektionseinrichtung 24 an die Steuerungs- und/oder Regelungseinrichtung 23 angeschlossen ist, wobei die Federkraft der Rollen 18 auf der Basis während des Prozesses durch die erste Detektionseinrichtung 24 ermittelter Prozessparameter oder auf der Basis voreingestellter und während des Prozesses durch die erste Detektionseinrichtung 24 ermittelter Prozessparameter steuerbar und/oder regelbar ist.

Das bedeutet, dass mindestens eine der Rollen 18, vorzugsweise jedoch zwei oder mehr Rollen 18 der Rollenbahn 17, bezüglich der Federkraft einstellbar ausgebildet und eingerichtet ist bzw. sind.

Das Rahmengestell 11 kann z.B. ein geschlossenes oder mindestens teilweise geschlossenes Gehäuse oder eine Profilkonstruktion oder dergleichen sein. Bevorzugt ist das Gehäuse allseitig geschlossen. Am oder im Rahmengestell 11 ist die (nicht dargestellte) Antriebseinheit für die Hohltrommel 12 und/oder das Pressband 13 angeordnet. Die Antriebseinheit kann einen gemeinsamen Antrieb oder separate Antriebsmittel umfassen. Die Rotationsachse A der Hohltrommel 12 verläuft quer zur Förderrichtung F des Produktstroms. In der perforierten Mantelfläche M der Hohltrommel 12 sind Bohrungen/Öffnungen 19 ausgebildet, die in unterschiedlichen Mustern angeordnet sein können und den Durchtritt von Teilen des Produktstroms, insbesondere den leichter fließenden, weichen und quetschfähigen Teilen, in das Innere der Hohltrommel 12 erlauben. Das Pressband 13 besteht vorzugsweise aus einem elastischen Werkstoff, z.B. Gummi, Polyurethan oder dergleichen und ist um mehrere Umlenkelemente 20 geführt. Vorzugsweise ist ein Umlenkelement 20 als Antriebswalze 21 ausgebildet und eingerichtet. Besonders bevorzugt ist das Umlenkelement 20, das in Förderrichtung F hinter der Hohltrommel 12 platziert ist, die Antriebswalze 21, um das Pressband 13 und damit den Produktstrom ziehend an der Hohltrommel 12 vorbeizuführen. Besonders bevorzugt ist die Antriebswalze 21 gleichzeitig als Andruckwalze und/oder Spannwalze für das Pressband 13 ausgebildet und eingerichtet. Dazu ist die Antriebswalze 21 verstellbar ausgebildet. Durch den eigenen Antrieb der Hohltrommel 12 kann das Fördern des Produktstroms in Förderrichtung F noch unterstützt werden.

Vorzugsweise ist (sind) mindestens die im Einlaufbereich E befindliche(n) Rolle(n) 18 der Rollenbahn 17 hinsichtlich ihrer Federkraft steuerbar. Insbesondere im Einlaufbereich E, in dem der Produktstrom zwischen die Hohltrommel 12 und das Pressband "eingefädelt" wird, treten Belastungsspitzen auf, so dass das Pressband 13 zur Aufrechterhaltung des (Einlauf-)Winkels durch die bezüglich ihrer Federkraft steuerbaren/einstellbare(n) Rolle(n) individuell gestützt werden kann.

Besonders bevorzugt sind alle Rollen 18 der Rollenbahn 17 federnd gelagert, wobei die Federkraft für jede Rolle 18 jeweils individuell während des Betriebs der Vorrichtung 10 steuerbar ist. Gegenüber einer gemeinsamen und synchronen Steuerung aller Rollen 18, die ebenfalls möglich ist, gewährleistet eine separate Steuerung jeder Rolle 18 eine erhöhte Flexibilität. Durch die Einstellbarkeit der Federkraft während des Betriebs der Vorrichtung 10, also quasi online, kann unmittelbar auf Belastungszustände reagiert werden, und zwar genau in dem Bereich der Druckzone D, in dem eine Anpassung der Federkraft notwendig oder gewünscht ist.

Die federnde Lagerung der Rollen 18 kann auf unterschiedliche Weise realisiert sein. Beispielsweise kann die Federkraft über Pneumatikzylinder oder Hydraulikzylinder eingestellt werden. Besonders bevorzugt ist der oder jeder Rolle 18 jeweils mindestens ein Proportionalventil 22 zum aktiven Einstellen der Federkraft zugeordnet. Das oder jedes Proportionalventil 22 kann z.B. dem Pneumatikzylinder oder dem Hydraulikzylinder zugeordnet sein, um die Federkraft der Rolle 18 variabel einzustellen. Für das aktive Einstellen ist jedes Proportionalventil 22 oder jedes andere Mittel zum Steuern und/oder Regeln der Federkraft an eine Steuer- und/oder Regelungseinrichtung 23 angeschlossen ist. Es können mehrere einzelne Steuer- und/oder Regelungseinrichtungen 23 vorgesehen sein. Bevorzugt ist eine gemeinsame Steuer- und/oder Regelungseinrichtung 23 vorgesehen, an die auch andere Komponenten der Vorrichtung 10, z.B. die Antriebe für die Hohltrommel 12 und/oder das Pressband 13 sowie Stellelemente für die Antriebswalze 21, angeschlossen sind.

Erfindungsgemäß umfasst die Vorrichtung 10 eine erste Detektionseinrichtung 24, die zum Detektieren produktspezifischer Daten des einlaufenden Produktstroms als Prozessparameter ausgebildet und eingerichtet ist, wobei die erste Detektionseinrichtung 24 ebenfalls an die Steuerungs- und/oder Regelungseinrichtung 23 angeschlossen ist. Dadurch, dass die Vorrichtung 10 eine solche erste Detektionseinrichtung 24 aufweist, kann der jeweils aktuelle Betriebszustand bezogen auf den Produktstrom ermittelt werden, so dass die Federkräfte nicht nur auf voreingestellte und damit erwartete Betriebszustände, sondern auch auf unerwartete und vor allem sich verändernde Betriebszustände angepasst werden können. Besonders bevorzugt umfasst die erste Detektionseinrichtung 24 zum Detektieren produktspezifischer Daten mindestens eine Sensoreinheit 25 zum Detektieren des Volumens und/oder der Dichte und/oder der Konsistenz des Produktstroms sowie weiterer produktspezifischer Daten, wie z.B. der Produktart, der Zusammensetzung des Produktstroms etc.. Die Sensoreinheit 25 kann z.B. optische, magnetische, mechanische, kapazitive sowie andere Sensormittel umfassen. Anstelle der Sensoreinheit 25 oder ergänzend zu dieser kann z.B. auch eine Röntgeneinheit und/oder eine Kameraeinheit und/oder jede andere bekannte Einheit, die zum Detektieren von produktspezifischen Daten zum Produktstrom ausgebildet und eingerichtet ist, vorgesehen sein.

Optional ist der Vorrichtung 10 eine zweite Detektionseinrichtung 26 zugeordnet, die zum Detektieren vorrichtungsspezifischer Daten als Prozessparameter ausgebildet und eingerichtet ist, wobei die zweite Detektionseinrichtung 26 an die Steuerungs- und/oder Regelungseinrichtung 23 angeschlossen sein kann und auch ist. Dadurch, dass die Vorrichtung 10 eine solche zweite Detektionseinrichtung 26 umfasst, kann der jeweils aktuelle Betriebszustand bezogen auf die Vorrichtung 10 ermittelt werden, so dass die Federkräfte nicht nur auf voreingestellte und damit erwartete Betriebszustände sondern auch auf unerwartete und vor allem sich verändernde Betriebszustände angepasst werden können. Besonders bevorzugt umfasst die zweite Detektionseinrichtung 26 zum Detektieren vorrichtungsspezifischer Daten mindestens eine Sensoreinheit 27 zum Detektieren des an den Proportionalventilen 22 anliegenden Drucks und/oder des Verschleißes des Pressbandes 13 und/oder der Spaltgröße zwischen Pressband 13 und Hohltrommel 12 sowie weiterer vorrichtungsspezifischer Daten, wie z.B. der Dehnung des Pressbandes etc.. Die Sensoreinheit 27 kann z.B. optische, magnetische, mechanische, kapazitive sowie andere Sensormittel umfassen. Anstelle der Sensoreinheit 25 oder ergänzend zu dieser kann z.B. auch eine Röntgeneinheit und/oder eine Kameraeinheit und/oder jede andere bekannte Einheit, die zum Detektieren von vorrichtungsspezifischen Daten ausgebildet und eingerichtet ist, vorgesehen sein.

In der schematischen Zeichnung ist die Vorrichtung 10 bevorzugt dadurch gekennzeichnet, dass alle Proportionalventile 22 an eine gemeinsame Steuerungs- und/oder Regelungseinrichtung 23 angeschlossen sind, wobei die Steuerungs- und/oder Regelungseinrichtung 23 einen Datenspeicher 28 und eine Auswerteeinheit 29 umfasst, um voreingestellte und/oder während des Prozesses ermittelte Prozessparameter zu speichern und/oder zu verarbeiten, derart, dass die Federkraft jeder Rolle 18 auf der Basis der Prozessparameter steuerbar und/oder regelbar ist. Die Steuer- und/oder Regelungseinrichtung 23 kann mit einem handelsüblichen Personal Computer (PC) oder jeder anderen Computereinheit verbunden sein. Die Steuer- und/oder Regelungseinrichtung 23 und/oder der PC können separat ausgebildet und der Vorrichtung 10 zugeordnet oder integraler Bestandteil der Vorrichtung 10 sein.

Die Vorrichtung 10 ist im Wesentlichen aus Edelstahl hergestellt. Das gilt insbesondere für das Rahmengestell 11 und die Hohltrommel 12. Selbstverständlich sind auch andere Werkstoffe möglich. Das Pressband 13 ist bevorzugt aus einem flexiblen Material hergestellt. Die Rollen 18 sind bevorzugt aus einem in der Nahrungsmittel verarbeitenden Industrie zugelassenen Werkstoff, insbesondere Kunststoff hergestellt. Andere zugelassene Werkstoffe sind aber ebenfalls einsetzbar, insbesondere dann, wenn sie einerseits leicht zu reinigen und verschleißfest sind und andererseits ein geringes Gewicht aufweisen.

In einer weiteren (nicht explizit dargestellten) Ausführungsform kann die Stützvorrichtung 15 neben der Rollenbahn 17 als Stützelement 16 eine Stützkette umfassen, wobei die Rollen 18 der Rollenbahn 17 dann mindestens teilweise als Kettenräder ausgebildet sind. Die Rollen 18 können unabhängig davon, ob sie direkt als Stützelement 16 auf das Pressband 13 wirken, oder indirekt über die Stützkette auf das Pressband 13 wirken, fest aber lösbar am Rahmengestell 11 gelagert sein. Bevorzugt sind die Rollen 18 - im Gegensatz zu einer festen aber lösbaren Befestigung - mit einem Schnellverschlusssystem am Rahmengestell 11 gelagert. Dadurch lassen sich die Rollen 18 einfach und schnell im Wartungsfall oder im Reinigungsfall, vorzugsweise ohne den Einsatz von Werkzeugen, lösen und wieder einsetzen.

Optional können im Einlaufbereich, also oberhalb des Produkt-Einzugskeils 14, und/oder im Ausgabebereich, also in Förderrichtung F hinter der Hohltrommel 12, die auch als Lochtrommel bezeichnet wird, Abstreifelemente angeordnet sein. Diese Abstreifelemente können starr, also mit einem festen Abstand zur Hohltrommel 12 bzw. genauer zur Mantelfläche M, oder variabel steuerbar, also im Abstand zur Hohltrommel 12 bzw. genauer zur Mantelfläche M veränderlich, ausgebildet sein. Die Hohltrommel 12 und das Pressband 13 können mit gleicher Geschwindigkeit angetrieben werden. Optional können die Hohltrommel 12 und das Pressband 13 jedoch auch mit unterschiedlichen Geschwindigkeiten angetrieben werden. Die Geschwindigkeitsdifferenz ist mittels der Steuer- und/oder Regelungseinrichtung 23 steuerbar und/oder regelbar.

Im Folgenden wird das Verfahren anhand der Zeichnung näher beschrieben. Das Verfahren dient und ist entsprechend zum Trennen von miteinander vermischten Stoffen unterschiedlicher Fließfähigkeit ausgebildet und eingerichtet. Zunächst wird ein aus Pressgut bestehender Produktstrom in einen Produkt-Einzugskeil 14, der durch eine Hohltrommel 12 mit perorierter Mantelfläche M und ein Pressband 13, das von außen an der Hohltrommel 12 unter Umschlingung eines Teils des Umfangs anliegt, gebildet ist, zugeführt. Für den Trennprozess werden die Hohltrommel 12 und das Pressband 13 zum Einziehen des Produktstroms zwischen die Hohltrommel 12 und das Pressband 13 umlaufend angetrieben. Bevorzugt ist die Hohltrommel 12 (in der Ansicht gemäß Figur 1) im Uhrzeigersinn angetrieben, während die Antriebswalze 21 für das Pressband (in der Ansicht gemäß Figur 1) entgegen dem Uhrzeigersinn angetrieben ist, so dass die Hohltrommel 12 und das Pressband 13 im Bereich der Umschlingung, also der Druckzone D, die gleiche Transportrichtung aufweisen, wobei die Transportgeschwindigkeiten gleich sein oder voneinander abweichen können. Durch den Transport des Produktstroms entlang der Druckzone D werden die leichter fließenden Bestandteile des Produktstroms mittels des Pressbandes 13 durch die Perforation der Mantelfläche M der Hohltrommel 12 in den inneren Hohlraum der Hohltrommel 12 gepresst und abgeführt, während die schwerer fließenden Bestandteile des Produktstroms außen auf der Mantelfläche M der Hohltrommel 12 verbleiben und separat abgegeben werden. Während des Trennens des Produktstroms in seine Bestandteile wird das Pressband 13 auf der der Hohltrommel 12 entgegengesetzten Seite des Pressbandes 13 durch eine Rollenbahn 17, die mehrere in Förderrichtung (F) des Produktstroms hintereinander angeordnete und mindestens teilweise federnd gelagerte Rollen 18 umfasst, als Stützelement 16 gestützt.

Die Federkraft mindestens einzelner Rollen 18 wird gesteuert. Das Verfahren zeichnet sich erfindungsgemäß dadurch aus, dass die Federkraft der Rollen 18 auf der Basis während des Prozesses durch die erste Detektionseinrichtung ermittelter Prozessparameter oder auf der Basis voreingestellter und während des Prozesses durch die erste Detektionseinrichtung ermittelter Prozessparameter gesteuert und/oder geregelt wird. Die Federkraft kann auf verschiedene Weise eingestellt werden. Gemäß dem Verfahren der Erfindung ist allen Rollen 18 jeweils mindestens ein Proportionalventil 22 zugeordnet und die Proportionalventile 22 sind an eine Steuerungs- und/oder Regelungseinrichtung 23 angeschlossen, so dass alle Rollen 18 bezüglich ihrer Federkraft aktiv eingestellt werden. Beispielsweise kann der Federdruck einzelner oder mehrerer oder aller Rollen 18 erhöht werden, wenn ein Produktstrom höherer Dichte in seine Bestandteile getrennt werden soll. In einen anderen Beispielfall kann der Federdruck einzelner oder mehrerer oder aller Rollen 18 reduziert werden, wenn die Dehnung des Pressbandes 13 einen Grenzwert überschreitet. Der Federdruck wird in Abhängigkeit sich während des Trennprozesses ändernder Prozessparameter des Produktstroms (und optional auch der Vorrichtung 10 selbst) oder in Abhängigkeit voreingestellter und sich während des Trennprozesses ändernder Prozessparameter des Produktstroms (und optional auch der Vorrichtung 10 selbst) eingestellt.

Dazu werden mittels einer ersten Detektionseinrichtung 24 produktspezifische Daten des einlaufenden Produktstroms als Prozessparameter detektiert. Mittels einer zweiten Detektionseinrichtung 26 werden vorrichtungsspezifische Daten einer Vorrichtung 10 zum Trennen von miteinander vermischten Stoffen unterschiedlicher Fließfähigkeit als Prozessparameter detektiert. Die Ergebnisse der Detektion der Prozessparameter bzw. die entsprechenden Daten werden gespeichert und/oder verarbeitet, so dass die Steuer- und/oder Regelungseinrichtung 23 die Federkraft jeder Rolle 18 auf der Basis der Daten individuell vor Inbetriebnahme der Vorrichtung 10 oder während des Betriebs der Vorrichtung 10 einstellen kann.

Besonders bevorzugt wird das Verfahren mit einer Vorrichtung 10 nach einem oder mehreren der Ansprüche 1 bis 9, wie sie zuvor beschrieben wurde, ausgeführt.

## Patentansprüche

1. Vorrichtung (10) zum Trennen von miteinander vermischten Stoffen unterschiedlicher Fließfähigkeit, umfassend ein Rahmengestell (11), eine umlaufend angetriebene und am Rahmengestell (11) gelagerte Hohltrommel (12) mit perforierter Mantelfläche (M), ein von außen an diese unter Umschlingung eines Teils des Umfangs der Hohltrommel anpressbares, endloses Pressband (13), das umlaufend angetrieben ist, einen durch Pressband und Hohltrommel gebildeten Produkt-Einzugskeil (14) zum Leiten eines aus Pressgut bestehenden Produktstroms zwischen die Hohltrommel (12) und das Pressband (13) in einem Einlaufbereich (E) des Produktstroms in die Vorrichtung, sowie eine Stützvorrichtung (15) für das Pressband (13) mit wenigstens einem Stützelement (16), das auf der der Hohltrommel (12) entgegengesetzten Seite des Pressbandes (13) angeordnet ist, wobei das Stützelement (16) als Rollenbahn (17) ausgebildet ist, die mehrere Rollen (18) umfasst, die in Förderrichtung (F) des Produktstroms hintereinander angeordnet und mindestens teilweise federnd gelagert sind, wobei die Federkraft mindestens einzelner Rollen (18) steuerbar ist, **dadurch gekennzeichnet, dass** der oder jeder Rolle (18) jeweils mindestens ein Proportionalventil (22) zum aktiven Einstellen der Federkraft zugeordnet und jedes Proportionalventil (22) an eine einen Datenspeicher (28) und eine Auswerteeinheit (29) umfassende Steuer- und/oder Regelungseinrichtung (23) angeschlossen ist, wobei der Vorrichtung (10) eine erste Detektionseinrichtung (24) zugeordnet ist, die zum Detektieren produktspezifischer Daten des einlaufenden Produktstroms als Prozessparameter ausgebildet und eingerichtet ist, wobei die erste Detektionseinrichtung (24) an die Steuerungs- und/oder Regelungseinrichtung (23) angeschlossen ist, wobei die Federkraft der Rollen (18) auf der Basis während des Prozesses durch die erste Detektionseinrichtung ermittelter Prozessparameter oder auf der Basis voreingestellter und während des Prozesses durch die erste Detektionseinrichtung ermittelter Prozessparameter steuerbar und/oder regelbar ist.

2. Vorrichtung (10) nach Anspruch 1, **dadurch gekennzeichnet, dass** mindestens die im Einlaufbereich (E) befindliche(n) Rolle(n) (18) der Rollenbahn (17) hinsichtlich ihrer Federkraft steuerbar ist (sind).

3. Vorrichtung (10) nach Anspruch 1 oder 2, **dadurch gekennzeichnet, dass** alle Rollen (18) der Rollenbahn (17) federnd gelagert sind, wobei die Federkraft für jede Rolle (18) jeweils individuell während des Betriebs der Vorrichtung (10) steuerbar ist.

4. Vorrichtung (10) nach einem oder mehreren der Ansprüche 1 bis 3, **dadurch gekennzeichnet, dass** der Vorrichtung eine zweite Detektionseinrichtung (26) zugeordnet ist, die zum Detektieren vorrichtungsspezifischer Daten als Prozessparameter ausgebildet und eingerichtet ist, wobei die zweite Detektionseinrichtung (26) an die Steuerungs- und/oder Regelungseinrichtung (23) angeschlossen ist.

5. Vorrichtung (10) nach Anspruch 4, **dadurch gekennzeichnet, dass** alle Proportionalventile (22) an eine gemeinsame Steuerungs- und/oder Regelungseinrichtung (23) angeschlossen sind, wobei die Steuerungs- und/oder Regelungseinrichtung (23) einen Datenspeicher (28) und eine Auswerteeinheit (29) umfasst, um während des Prozesses durch die erste und die zweite Detektionseinrichtung ermittelte Prozessparameter oder voreingestellte und während des Prozesses durch die erste und zweite Detektionseinrichtung ermittelte Prozessparameter zu speichern und/oder zu verarbeiten, derart, dass die Federkraft jeder Rolle (18) auf der Basis der Prozessparameter steuerbar und/oder regelbar ist.

6. Vorrichtung (10) nach einem oder mehreren der Ansprüche 1 bis 5, **dadurch gekennzeichnet, dass** die erste Detektionseinrichtung (24) zum Detektieren produktspezifischer Daten mindestens eine Sensoreinheit (25) zum Detektieren des Volumens und/oder der Dichte und/oder der Konsistenz des Produktstroms umfasst.

7. Vorrichtung (10) nach einem oder mehreren der Ansprüche 4 bis 6, **dadurch gekennzeichnet, dass** die zweite Detektionseinrichtung (26) zum Detektieren vorrichtungsspezifischer Daten mindestens eine Sensoreinheit (27) zum Detektieren des an den Proportionalventilen (22) anliegenden Drucks und/oder des Verschleißes des Pressbandes (13) und/oder der Spaltgröße zwischen Pressband (13) und Hohltrommel (12) umfasst.

8. Vorrichtung (10) nach einem oder mehreren der Ansprüche 1 bis 7, **dadurch gekennzeichnet, dass** die Stützvorrichtung (15) neben der Rollenbahn (17) als Stützelement (16) eine Stützkette umfasst, wobei die Rollen (18) der Rollenbahn (17) dann mindestens teilweise als Kettenräder ausgebildet sind.

9. Vorrichtung (10) nach einem oder mehreren der Ansprüche 1 bis 8, **dadurch gekennzeichnet, dass** die Rollen (18) mit einem Schnellverschlusssystem am Rahmengestell (11) gelagert sind.

10. Verfahren zum Trennen von miteinander vermischten Stoffen unterschiedlicher Fließfähigkeit, umfassend die Schritte:
- Zuführen eines aus Pressgut bestehenden Produktstroms in einen Produkt-Einzugskeil (14), der durch eine Hohltrommel (12) mit perforierter Mantelfläche (M) und ein Pressband (13), das von außen an der Hohltrommel (12) unter Umschlingung eines Teils des Umfangs anliegt, gebildet ist,
- umlaufendes Antreiben der Hohltrommel (12) und/oder des Pressbandes (13) zum Einziehen des Produktstroms zwischen die Hohltrommel (12) und das Pressband (13),
- wobei die leichter fließenden Bestandteile des Produktstroms mittels des Pressbandes (13) durch die Perforation der Mantelfläche (M) der Hohltrommel (12) in den inneren Hohlraum (H) der Hohltrommel (12) gepresst und abgeführt werden, während die schwerer fließenden Bestandteile des Produktstroms außen auf der Mantelfläche (M) der Hohltrommel (12) verbleiben und separat abgegeben werden,
- wobei das Pressband (13) auf der der Hohltrommel (12) entgegengesetzten Seite des Pressbandes (13) durch eine Rollenbahn (17), die mehrere in Förderrichtung (F) des Produktstroms hintereinander angeordnete und mindestens teilweise federnd gelagerte Rollen (18) umfasst, als Stützelement (16) gestützt wird,
wobei die Federkraft mindestens einzelner Rollen (18) gesteuert wird, **dadurch gekennzeichnet, dass** allen Rollen (18) jeweils mindestens ein Proportionalventil (22) zugeordnet ist und die Proportionalventile (22) an eine Steuerungs- und/oder Regelungseinrichtung (23) angeschlossen sind, so dass alle Rollen (18) bezüglich ihrer Federkraft aktiv eingestellt werden, wobei
mittels einer ersten Detektionseinrichtung (24) produktspezifische Daten des einlaufenden Produktstroms als Prozessparameter detektiert werden, so dass die Federkraft der Rollen (18) auf der Basis während des Prozesses durch die erste Detektionseinrichtung ermittelter Prozessparameter oder auf der Basis voreingestellter und während des Prozesses durch die erste Detektionseinrichtung ermittelter Prozessparameter gesteuert und/oder geregelt wird.

11. Verfahren nach Anspruch 10, **dadurch gekennzeichnet, dass** mittels einer zweiten Detektionseinrichtung (26) vorrichtungsspezifische Daten einer Vorrichtung (10) zum Trennen von miteinander vermischten Stoffen unterschiedlicher Fließfähigkeit als Prozessparameter detektiert werden.

12. Verfahren nach Anspruch 11, **dadurch gekennzeichnet, dass** die Federkraft der Rollen (18) auf der Basis während des Prozesses durch die erste und die zweite Detektionseinrichtung ermittelter Prozessparameter oder auf der Basis voreingestellter und während des Prozesses durch die erste und die zweite Detektionseinrichtung ermittelter Prozessparameter gesteuert und/oder geregelt wird.

13. Verfahren nach einem oder mehreren der Ansprüche 10 bis 12, **dadurch gekennzeichnet, dass** es mit einer Vorrichtung (10) nach einem oder mehreren der Ansprüche 1 bis 9 ausgeführt wird.

## Claims

1. Apparatus (10) for separating materials of different flowability that are mixed together, comprising a frame structure (11); a hollow drum (12) with perforated peripheral surface (M) which is driven in rotation and mounted on the frame structure (11), a continuous compression belt (13) which can be pressed against said peripheral surface from the outside when wrapped around part of the circumference of said hollow drum and which is driven in circulation, a product intake wedge (14) formed by the compression belt and hollow drum for conducting a product stream, comprising a product to be pressed, into the apparatus between the hollow drum (12) and the compression belt (13) in an inlet area (E) of the product stream, and a support apparatus (15) for the compression belt (13), with at least one support element (16) which is arranged on the side of the compression belt (13) opposite the hollow drum (12), wherein the support element (16) is configured as a roller track (17) comprising several rollers (18) which are arranged successively in the conveying direction (F) of the product stream and at least partially spring-mounted, wherein the spring force of at least individual rollers (18) is controllable, **characterized in that** at least one proportional valve (22) is assigned to the or each roller (18) for active adjustment of the spring force and each proportional valve (22) is connected to a control and/or regulating device (23) comprising a data store (28) and an analysis unit (29), wherein a first detection device (24) is assigned to the apparatus (10), which detection device is configured and designed to detect product-specific data of the inflowing product stream as process parameters, wherein the first detection device (24) is connected to the control and/or regulating device (23), wherein the spring force of the rollers (18) is controllable and/or adjustable on the basis of process parameters which are determined during the process by means of the first detection device or on the basis of process parameters preset and determined during the process by means of the first detection device.

2. Apparatus (10) according to claim 1, **characterized in that** the spring force of at least the roller(s) (18) of the roller track (17) situated in the inlet area (E) is controllable.

3. Apparatus (10) according to claim 1 or 2, **characterized in that** all rollers (18) of the roller track (17) are spring-mounted, wherein the spring force is controllable individually for each roller (18) during operation of the apparatus (10).

4. Apparatus (10) according to one or more of claims 1 to 3, **characterized in that** a second detection device (26) is assigned to the apparatus (10), which detection device is configured and designed to detect apparatus-specific data as process parameters, wherein the second detection device (26) is connected to the control and/or regulating device (23).

5. Apparatus (10) according to claim 4, **characterized in that** all proportional valves (22) are connected to a common control and/or regulating device (23), wherein the control and/or regulating device (23) comprises a data store (28) and an analysis unit (29) for storing and/or processing process parameters which are determined during the process by means of the first and the second detection device or process parameters which are preset and determined during the process by means of the first and second detection device, such that the spring force of each roller (18) can be controlled and/or regulated on the basis of the process parameters.

6. Apparatus (10) according to one or more of claims 1 to 5, **characterized in that** the first detection device (24) for detecting product-specific data comprises at least one sensor unit (25) for detecting the volume and/or density and/or consistency of the product stream.

7. Apparatus (10) according to one or more of claims 4 to 6, **characterized in that** the second detection device (26) for detecting apparatus-specific data comprises at least one sensor unit (27) for detecting the pressure present at the proportional valves (22) and/or the wear on the compression belt (13) and/or the gap size between the compression belt (13) and the hollow drum (12).

8. Apparatus (10) according to one or more of claims 1 to 7, **characterized in that** the support apparatus (15) comprises, in addition to the roller track (17), a support chain as a support element (16), wherein the rollers (18) of the roller track (17) are then formed at least partially as chain wheels.

9. Apparatus (10) according to one or more of claims 1 to 8, **characterized in that** the rollers (18) are mounted on the frame structure (11) by a quick-locking system.

10. Method for separating materials of different flowability that are mixed together, comprising the steps:
- supply of a product stream, comprising a product to be pressed, into a product intake wedge (14) which is formed by a hollow drum (12) with perforated peripheral surface (M) and a compression belt (13) which lies on the hollow drum (12) from the outside, wrapped around part of the circumference,
- driving the hollow drum (12) and/or the compression belt (13) in circulation in order to draw in the product stream between the hollow drum (12) and the compression belt (13),
- wherein the more easily flowing constituents of the product stream are pressed into the inner hollow chamber (H) of the hollow drum (12) by means of the compression belt (13) through the perforations of the peripheral surface (M) of the hollow drum (12) and discharged, while the less easily flowing constituents of the product stream remain on the outside of the peripheral surface (M) of the hollow drum (12) and are discharged separately,
- wherein on the side of the compression belt (13) opposite the hollow drum (12), the compression belt (13) is supported by a roller track (17) as a support element (16), which comprises several at least partially spring-mounted rollers (18) arranged successively in the conveying direction (F) of the product stream,
wherein the spring force of at least some rollers (18) is controlled, **characterized in that** at least one proportional valve (22) is assigned to each roller (18), and the proportional valves (22) are connected to a control and/or regulating device (23) so that the spring force of all rollers (18) is actively adjusted, wherein by means of a first detection device (24), product-specific data of the inflowing product stream are detected as process parameters, so that the spring force of the rollers (18) is controlled and/or regulated on the basis of process parameters which are determined during the process by means of the first detection device or on the basis of process parameters which are preset and determined during the process by means of the first detection device.

11. Method according to claim 10, **characterized in that** by means of a second detection device (26), apparatus-specific data of an apparatus (10) for separating materials of different flowability that are mixed together are detected as process parameters.

12. Method according to claim 11, **characterized in that** the spring force of the rollers (18) is controlled and/or regulated on the basis of process parameters which are determined during the process by means of the first and the second detection device or on the basis of process parameters which are preset and determined during the process by means of the first and the second detection device.

13. Method according to one or more of claims 10 to 12, **characterized in that** it is carried out with an apparatus (10) according to one or more of claims 1 to 9.

## Revendications

1. Dispositif (10) pour séparer des substances de fluidités différentes mélangées entre elles, comprenant un châssis (11), un tambour creux (12) entraîné en rotation et monté sur le châssis (11) avec une surface d'enveloppe perforée (M), une bande de pressage sans fin (13) pouvant être pressée de l'extérieur sur celle-ci en s'enroulant autour d'une partie de la circonférence du tambour creux, qui est entraînée en rotation, un coin d'alimentation de produit (14) formé par la bande de pressage et le tambour creux pour guider un courant de produit constitué de matière à presser entre le tambour creux (12) et la bande de pressage (13) dans une zone d'entrée (E) du courant de produit dans le dispositif, ainsi qu'un dispositif de support (15) pour la bande de pressage (13) avec au moins un élément de support (16) qui est agencé sur le côté de la bande de pressage (13) opposé au tambour creux (12), l'élément de support (16) étant configuré sous forme de convoyeur à rouleaux (17) qui comprend plusieurs rouleaux (18) agencés les uns derrière les autres dans la direction de convoyage (F) du courant de produit et montés au moins en partie de manière élastique, la force élastique d'au moins certains rouleaux (18) pouvant être commandée, **caractérisé en ce qu'**au moins une soupape proportionnelle (22) est associée au ou à chaque rouleau (18) pour régler activement la force élastique, et chaque soupape proportionnelle (22) est raccordée à un appareil de commande et/ou de régulation (23) comprenant une mémoire de données (28) et une unité d'évaluation (29), le dispositif (10) étant associé à un premier appareil de détection (24) qui est configuré et adapté pour détecter des données spécifiques au produit du courant de produit entrant en tant que paramètres de processus, le premier appareil de détection (24) étant raccordé à l'appareil de commande et/ou de régulation (23), la force élastique des rouleaux (18) pouvant être commandée et/ou régulée sur la base de paramètres de processus déterminés pendant le processus par le premier appareil de détection ou sur la base de paramètres de processus préréglés et déterminés pendant le processus par le premier appareil de détection.

2. Dispositif (10) selon la revendication 1, **caractérisé en ce qu'**au moins le ou les rouleaux (18) du convoyeur à rouleaux (17) se trouvant dans la zone d'entrée (E) peuvent être commandés au regard de leur force élastique.

3. Dispositif (10) selon la revendication 1 ou 2, **caractérisé en ce que** tous les rouleaux (18) du convoyeur à rouleaux (17) sont montés de manière élastique, la force élastique pouvant être commandée individuellement pour chaque rouleau (18) pendant le fonctionnement du dispositif (10).

4. Dispositif (10) selon une ou plusieurs des revendications 1 à 3, **caractérisé en ce qu'**un deuxième appareil de détection (26) est associé au dispositif, lequel est configuré et adapté pour détecter des données spécifiques au dispositif en tant que paramètres de processus, le deuxième appareil de détection (26) étant raccordé à l'appareil de commande et/ou de régulation (23).

5. Dispositif (10) selon la revendication 4, **caractérisé en ce que** toutes les soupapes proportionnelles (22) sont raccordées à un appareil de commande et/ou de régulation (23) commun, l'appareil de commande et/ou de régulation (23) comprenant une mémoire de données (28) et une unité d'évaluation (29) afin de stocker et/ou de traiter des paramètres de processus déterminés pendant le processus par le premier et le deuxième appareil de détection ou des paramètres de processus préréglés et déterminés pendant le processus par le premier et le deuxième appareil de détection, de telle sorte que la force élastique de chaque rouleau (18) peut être commandée et/ou régulée sur la base des paramètres de processus.

6. Dispositif (10) selon une ou plusieurs des revendications 1 à 5, **caractérisé en ce que** le premier appareil de détection (24) pour détecter des données spécifiques au produit comprend au moins une unité de capteur (25) pour détecter le volume et/ou la densité et/ou la consistance du courant de produit.

7. Dispositif (10) selon une ou plusieurs des revendications 4 à 6, **caractérisé en ce que** le deuxième appareil de détection (26) pour détecter des données spécifiques au dispositif comprend au moins une unité de capteur (27) pour détecter la pression appliquée aux soupapes proportionnelles (22) et/ou l'usure de la bande de pressage (13) et/ou la taille de l'espace entre la bande de pressage (13) et le tambour creux (12).

8. Dispositif (10) selon une ou plusieurs des revendications 1 à 7, **caractérisé en ce que** le dispositif de support (15) comprend, en plus du convoyeur à rouleaux (17), une chaîne de support en tant qu'élément de support (16), les rouleaux (18) du convoyeur à rouleaux (17) étant alors au moins partiellement configurés sous forme de roues à chaîne.

9. Dispositif (10) selon une ou plusieurs des revendications 1 à 8, **caractérisé en ce que** les rouleaux (18) sont montés sur le châssis (11) avec un système de fermeture rapide.

10. Procédé pour séparer des substances de fluidités différentes mélangées entre elles, comprenant les étapes :
- l'amenée d'un courant de produit constitué de matière à presser dans un coin d'alimentation de produit (14) formé par un tambour creux (12) avec une surface d'enveloppe perforée (M) et une bande de pressage (13) qui s'appuie de l'extérieur contre le tambour creux (12) en s'enroulant autour d'une partie de la circonférence,
- l'entraînement en rotation du tambour creux (12) et/ou de la bande de pressage (13) pour introduire le courant de produit entre le tambour creux (12) et la bande de pressage (13),
- les constituants plus fluides du courant de produit étant pressés et évacués au moyen de la bande de pressage (13) à travers les perforations de la surface d'enveloppe (M) du tambour creux (12) dans la cavité intérieure (H) du tambour creux (12), tandis que les constituants plus lourds du courant de produit restent à l'extérieur sur la surface d'enveloppe (M) du tambour creux (12) et sont déchargés séparément,
- la bande de pressage (13) étant supportée, sur le côté de la bande de pressage (13) opposé au tambour creux (12), par un convoyeur à rouleaux (17) qui comprend plusieurs rouleaux (18) agencés les uns derrière les autres dans la direction de convoyage (F) du courant de produit et montés au moins en partie de manière élastique, en tant qu'élément de support (16),
la force élastique d'au moins certains rouleaux (18) étant commandée,
**caractérisé en ce qu'**au moins une soupape proportionnelle (22) est associée respectivement à tous les rouleaux (18) et les soupapes proportionnelles (22) sont raccordées à un appareil de commande et/ou de régulation (23), de telle sorte que tous les rouleaux (18) sont réglés activement au regard de leur force élastique, des données spécifiques au produit du courant de produit entrant étant détectées en tant que paramètres de processus au moyen d'un premier appareil de détection (24), de telle sorte que la force élastique des rouleaux (18) est commandée et/ou régulée sur la base de paramètres de processus déterminés pendant le processus par le premier appareil de détection ou sur la base de paramètres de processus préréglés et déterminés pendant le processus par le premier appareil de détection.

11. Procédé selon la revendication 10, **caractérisé en ce qu'**au moyen d'un deuxième appareil de détection (26), des données spécifiques au dispositif d'un dispositif (10) pour séparer des substances de fluidités différentes mélangées entre elles sont détectées en tant que paramètres de processus.

12. Procédé selon la revendication 11, **caractérisé en ce que** la force élastique des rouleaux (18) est commandée et/ou régulée sur la base de paramètres de processus déterminés pendant le processus par le premier et le deuxième appareil de détection ou sur la base de paramètres de processus préréglés et déterminés pendant le processus par le premier et le deuxième appareil de détection.

13. Procédé selon une ou plusieurs des revendications 10 à 12, **caractérisé en ce qu'**il est mis en œuvre avec un dispositif (10) selon une ou plusieurs des revendications 1 à 9.
